# EUROPEAN PATENT APPLICATION

(11) **EP 4 173 817 A2**
(43) Date of publication of application: **03.05.2023**
(21) Application number: 22204600.5
(22) Date of filing: 29.10.2022
(51) Int. Cl.: B32B 7/12, B32B 15/085, B32B 15/12, B32B 15/20, B32B 37/16, B32B 37/20, B32B 38/16, B65D 65/40, B65D 85/72, B32B 37/14

(54) **A MULTILAYER LAMINATE AND A METHOD FOR MANUFACTURING THEREOF**

(30) Priority: 29.10.2021 EP 21205740
(71) Applicant: Green Owl Sp. z o.o., 04-956 Warszawa (PL)
(72) Inventor: CZERWINSKI, Grzegorz, 87-200 Wabrzezno (PL)
(74) Representative: Marcinska-Porzuc, Aleksandra

(57) **Abstract**

This invention relates to a multilayer laminat and a method for manufacturing thereof. More specifically, the invention relates to a laminate having barrier properties, protecting a product contained in a package produced therefrom completely in 100% by stopping the permeation of moisture, smells, et cetera, both from, as well as into the package. A package produced from the laminate contains ca. 60% smaller synthetic plastic materials per m² than currently used packages of similar basis weight.

## Description

### Field

This invention relates to a multilayer laminate, a method for manufacturing thereof. More specifically, the invention relates to a specific laminate having barrier properties, protecting a product contained in a package produced therefrom completely in 100% by stopping the permeation of moisture, smells, et cetera, both from, as well as into the package. A package produced from the laminate contains ca. 60% smaller synthetic plastic materials per m² than currently used packages of similar basis weight, which contain 100% syntetic plastic material (is paper free).

### State of the Art

Plastic materials and paper belong to the basic materials used for producing laminates.

From state of the art, one knows a laminate comprising paper, aluminum, and polyethylene layers. The order of the used layers is selected in various manners, where the external layer is made from paper, and the internal layer is from aluminum or vice versa. Also, it is possible to use paper and aluminum as the external layer and polyethylene as the internal layer. Various polymer derivatives are used as building blocks for the layers (e.g., polyethylene: HDPE, VLDPELDPE, LLDPE, PE, PUT), polyolefins, thermoplastic materials, etc. Many of them also function as elements binding different layers.

The composition and structure of individual laminate layers are determined, among others, by the intended use of the laminate (type of a product to be packaged and its processing), the method of manufacturing, and, to some extent, the recycling effectiveness.

Solutions are known in which the core of the material is a packing paper impregnated with resin and pressed at high pressure and high temperature. The impregnation with resin gives a color, attractive surface, and high mechanical strength. [https://www.formica.com/pl-pl/articles/commercial-interiors/laminate-is-made-of-paper].

A laminate of aluminum foil comprises a soft aluminum, paper laminate, and a layer of PE adhesive. Aluminum foil laminated with paper is available with various thicknesses, colors, and patterns. Paper laminate makes it possible to easily imprint this product, this giving freedom in giving individual product features. Also, the aluminum foil with paper may be sealed, thus making the foil dedicated to producing packages. [https://holtex.pl/oferta/folie-aluminiowe/folie-aluminiowe-laminowane/folie-aluminiowelaminowane-papierem] .

Unipaco laminate comprises the following layers: varnish (optionally), aluminum foil, adhesive, white smoothened paper (kraft), and LDPE: 10-30g/m². The varnish makes it possible to print onto the aluminum foil. The foil insulates against penetration of moisture, fragrant substances, and fats. The paper is a structural element and gives strength, whereas the polyethylene layer (LDPE) protects the paper against absorbing moisture and fat. [http://www.unipaco.com/oferta/laminaty/laminat-z-udzialem-paperu-bialego-gladzonegokraft, 12].

European Patent Application EP1465768 (published 2004-10-13) discloses a composite material made from paper or cardboard, as a carrier material (1) with a coating from plastic material, in particular in the case of hot-sealable gas- and liquid tight packages and every coating made from plastic material has external sealing layers (3), and a barrier layer (2) made from metal is placed between the layer of the carrier material (1) and the sealing layer (3). Also, the invention relates to a method for producing thereof. According to the invention, the layer of the carrier material (1) is protected in the composite material such that a package, made therefrom, along with a product contained therein, may be sterilized in an autoclave or similar, and said composite material might be produced in a simple and economical manner, whereby another barrier layer (2) is situated on the other side of the layer of the carrier material (1).

Patent Application JP2003154601 (published 2003-05-27) discloses a paper packaging material for liquid foods with a metallic luster. In the paper packaging material produced from a laminate, in which layers of thermoplastic resin are situated on both surfaces of the paper layer, the paper layer has a surface coated with an inorganic material such as argil or similar, or organic material such as polyethylene or similar. It has an aluminum layer defining a layer for depositing steam. If the coating layer of the paper layer is subjected to surface processing, a primer layer is placed between the coating layer and the aluminum layer defining the layer for depositing steam. Also, a top layer is placed on the aluminum layer, and the paper packaging material exhibits a metallic gloss or a gloss similar to the gloss of the packaging material produced using a conventional aluminum foil.

EP0138146 (published 1985-04-24) describes a packaging laminate for producing packaging containers for edible oil, with an internal layer immune to the influence of the oil that is not prone to be damaged by the oil, even during long periods of storing. The packaging laminate satisfying this condition has an embossed internal layer made from two different plastic materials that are mixed, namely LLDPE and LDPE.

EP0530662 (published 1993-03-10) describes a laminated packaging material that is easy for recycling. The desired multilayered structure is produced by laminating layers 2, 2 of polyvinyl alcohol or another water-based thermoplastic resin, correspondingly on both sides of layer 1 of the basic cardboard material, forming layer 3 from polyethylene or another thermoplastic synthetic resin over layer 2 in the external surface of the container, at the same time forming layer 4 of the liquid-resistant material, consisting of polyethylene or another thermoplastic synthetic resin, and, if desired, laminating layer 5 of aluminum foil over layer 6 of polyethylene or another adhesive resin that is formed onto layer 4 of the liquid-resistant material.

### Objective technical problem

Despite the existing state-of-the-art solutions, there is a continuous need for laminates that have lowered contents of synthetic plastic materials, making use of recycled materials, and providing, at the same time, barrier properties and tightness for the product, and ability to print on the laminate.

### Summary

Therefore, the objective of the invention is to obtain a laminate produced from recycled materials, containing about 60-70% smaller amount of synthetic plastic materials, in comparison with 100% full syntetic plastic laminates but, at the same time, having barrier properties and protecting a product contained within the package completely in 100% by stopping the permeation of moisture, smells, et cetera, both from, as well as into the package, and having high crush resistance.

The invention addresses the above technical problem by providing a multilayer laminate according to claim 1.

A package produced from the laminate of the invention contains ca. 60% smaller synthetic plastic materials per m² than laminates manufactured from synthetic plastic material, without paper, as currently used packages of similar basis weight in state of the art. The laminate consists of a paper layer, an aluminum layer, a polyethylene layer, and at least two layers of a binding agent. The paper layer is the external layer, the aluminum layer is the core layer, and the polyethylene layer of the laminate is the internal layer of the package. A first binding agent is situated between the paper external layer and the aluminium (core) layer, and between the aluminium (core) layer and the polyethylene (internal) layer, a second binding agent is situated. The first and second binding agents may be the same or different binding agents.

For example, the binding agent may be a solvent-based adhesive. It has high chemical endurance and is resistive to, among others, oil, water, low and high temperatures, exfoliation, tearing, and stretching. The use of a solvent-based adhesive makes it possible that the laminate structure is/remains elastic. According to the invention, one- and/or two-component solvent-based adhesives may be used as the binding agent layer. In the case of two components, the adhesive consists of an adhesive and a curing agent. The purpose of the curing agent is to strengthen the adhesive structure (better cross-linking). The curing agent is added to the adhesive in small amounts: usually 4-10%.

One may use various solvent-based adhesives, such as acrylic, silicone, hybrid or rubber-based, polychloroprene, etc. Optionally, one may use a non-solvent adhesive or a UV adhesive.

However, the binding agent may be any agent that creates a robust and permanent joint with the material of the laminate, in particular during laminating. For example, when preparing a solution of the binding agent suitable for coating an aluminum and/or paper and/or polyethylene layer, suitable solvents and organic ones are all conventional solvents and mixings of solvents used, for example, in fixing and/or printing techniques. A solvent-based adhesive or binding agent containing a solvent may be a solution, dispersion, emulsion, or paste. One skilled in the art may easily select and adjust the appropriate viscosity to the employed coating technique.

Techniques employed for coating a binding agent or a preparation containing a binding agent are all coating techniques. Optionally, one may also use techniques of painting, coating with a doctor blade, coating with a roller, stamping, pouring methods such as pouring a film, varnishing processes, immersing, coating with rollers. If the binding agent is an adhesive, to coat it, one may use a technique of hot adhesive laminating or cold adhesive laminating. It is possible for a one- and/or two-component solvent-based adhesive, a solvent-free, or a UV adhesive.

The laminate of the invention may be used for producing packages. The internal layer - polyethylene layer of the laminate serves for welding and then as a closure of the package. The package may have any arbitrary shape. For example, it may be oval, conical, cuboidal, prismatic, and any other non-symmetrical shape. For producing the internal layer, one uses polymer derivatives, for example, polyethylene: LDPE, HDPE, VLDPELDPE, LLDPE, PUT, polyolefins, thermoplastic materials, etc. Particularly preferable is to use low-density polyethylene (LDPE) for the polyethylene (internal) layer.

Also, the internal layer in the package may be produced from polyethylene terephthalate (PET), glycol-modified PET (PETG), polyethylene naphthalate (PEN), poly(vinyl chloride) (PVC), poly(vinyl butyral) (PVB), poly(methyl methacrylate) (PMMA), polyimide (PI), poly(vinyl alcohol) (PVA), polystyrene (PS), polyvinylphenol (PVP), polypropylene (PP), thermoplastic polymers (TPE), in particular, thermoplastic polyurethane (TPU), acrylonitrile-butadiene-styrene copolymer (ABS) and its derivatives, polyamide (PA). The external layer is produced from low grammage paper (cellulose). The core layer in the package is made from aluminum, for example, aluminum foil, aluminum alloy, or soft aluminum.

Moreover, the laminate may be produced from several of these materials. Especially preferably, it consists of several layers, and individual layers are made from different materials. For example, it is made from paper/aluminum/LDPE. The layers of the laminate can be made from recycled materials. Also, the laminate itself is 100% recyclable. It is possible that all the materials constituting the layers of the laminate are made from recycled materials or only some of the materials - for example, the paper layer and/or the polyethylene layer. The layers may be colored or colorless. At the same time, the used components make it possible to print on the external layer of the laminate using any arbitrary printing technique: screen printing, flexographic printing, offset printing, block-printing, intaglio. The flexibility of the laminate of the invention makes it possible to produce packages of any shape without the necessity of making bendings or creases. The external layer of the laminate may have high wear resistance. This relates both to foils being joined together - aluminum and polyethylene ones, as well as liquids applied onto the laminate as a protective or covering varnish. Then, one may coat the laminate produced in this way on one or two sides with a protective or covering varnish or foil. Such a protective layer may, in particular, protect against mechanical damages such as scratches. The external layer coated with a protective layer gives the required wear resistance to the laminate. The laminate has a thickness from 150 µm to 380 µm, in particular from 225 µm to 350 µm, for example 275 µm +/- 7%. Recycling requirements and definitions for recycled materials should be understood as set out in EU legislation, for example Directives EU 218/852 and 2008/98/WE.

Thus, this invention relates to a multilayer laminate comprising paper, aluminum, and polyethylene layers, characterized in that the multilayer laminate (10) comprise the following layers:
- a paper layer of a thickness in the range from 110 to 220 µm,
- a first binding agent layer of a basis weight from 5 to 7 g/m²,
- an aluminum layer of a thickness from 6 to 12 µm,
- a second binding agent layer of a basis weight from 5 to 7 g/m², and
- a polyethylene layer of a thickness range from 50 to 100 µm.

Preferably, the total thickness of the laminate is from 180 µm to 375 µm.

Preferably, the polyethylene layer is made from a low-density polyethylene (LDPE), and the binding agent is solvent-based one- and/or two-component adhesive.

According to the invention, the steam permeability of the multilayer laminate_is ≤ 2 g/m² x 24 h, 38°C, 90% - RH, and the oxygen permeability is ≤ 2 cm³/m² × 24 h × 0,1 MPa, 23°C, 0%-RH.

Preferably, the coefficient of traction is < 0,40.

According to the invention, the breaking strength in the longitudinal direction of the multilayer laminate is ≤ 60 MPa, and the breaking strength in the transverse direction is ≤ 30 MPa.

Additionally, the elongation at break in the longitudinal direction of the multilayer laminate is ≤ 8%, and the elongation at break in the transverse direction of the multilayer laminate is ≤ 10%.

The laminate of the invention is used for example for producing packages. When the laminate has a form of package, the paper layer constitutes the external layer, the aluminum layer constitutes the core layer, and the polyethylene layer is the internal layer of the package and serves for welding the laminate and then as a closure of the package. The welding temperature of the laminate for a package is 100°C -180°C.

A package produced from the multilayer laminate has at least 60% smaller synthetic plastic materials per m² than currently used full (100%) plastic packages of similar basis weight. The laminate of the invention in the form of package is tight and impervious to smells.

For example, the laminate may be printed, and the side for printing is the paper layer. Moreover, the laminate has barrier properties and protects the product placed in a package produced from that laminate in 100% by stopping the permeation of moisture, smells, and other factors, both from and into the package.

Also, this invention relates to a method for manufacturing of a multilayer laminate as defined above, where the following layers of the laminate: the paper layer, the aluminum layer, and the polyethylene layers are joined to each other during lamination on a laminating machine, by means of a first and a second layers of binding agent by applying the binding agent between individual, adjacent layers, the method comprising steps of:
a) unrolling a polyethylene layer of a thickness from in the range from 50 to 100 µm, from a reel on a laminating machine and joining it, by means of a second layer of a binding agent of a basis weight from 5 to 7 g/m², in a laminating assembly, with an aluminum layer of a thickness from 6 to 12 µm, that is also located on a reel,
b) seasoning the Alu/PE laminate obtained in step a) in a dedicated room at an ambient temperature,
c) after the period of seasoning, joining the Alu/PE laminate wound on the reel, from the side of the aluminium layer, with a paper layer of a thickness in the range from 110 to 220 µm, that is also wound on a reel, by means of a first layer of a binding agent of a basis weight from 5 to 7 g/m²,in a laminating assembly,
d) after joining together these layers, seasoning, again, the formed PAP/Alu/PE laminate obtained in step c) in a dedicated room at an ambient temperature.

Preferably, the laminate is seasoned in step b) and in step d) for 2 to 5 weeks at a temperature from 20 to 30°C.

Preferably, as the polyethylene layer a low-density polyethylene (LDPE) is used.

The laminate may be printed, and the side for printing is the paper layer.

Due to much smaller contents of synthetic plastic material in the laminate of the invention, at least 60% less of plastic in comparison with laminates made fully from synthetic plastic material, a package produced from the laminate is lighter, i.e., has a smaller weight. Decreased weight of a single package reduces the production and transport costs that depend on the burden of the transportation means. Thanks to a smaller load, at the same volume of the package as for known packages, the transportation means carrying the packages made from the laminate of the invention, consumes less fuel. Therefore, a package made from this laminate is ecological since, firstly, it is made from recycled materials, and about 60% of the package mass is paper. Secondly, the composition of the laminate guarantees a safe utilization of the product/package made therefrom. Thirdly, it contributes to protecting the environment by reducing the amount of fuel needed to transport products made from the laminate of the invention.

### Definitions

Paper layer 1 is termed interchangeably as a layer made from paper, an external layer, PAP.

The binding agent layers are termed interchangeably as a binding agent, a layer of adhesive, solvent-based adhesive. The first layer 2 of the binding agent and the second layers 4 of the binding agent may be produced from the same material, and each of the layers may be produced from another material or solution.

Aluminium layer 3 is termed interchangeably as a layer made from aluminum, aluminum foil, aluminum, Alu.

Polyethylene layer 5 is termed interchangeably as a polyethylene layer, an internal layer, polyethylene foil, PE, LDPE.

The laminate is termed interchangeably as a material.

The term "specially dedicated room" is understood as a room where the laminate is subjected to the seasoning process. This room should be sterile, and the seasoning temperature should be from 20°C to 30°C or from 23°C to 27°C, for example 25°C.

The term "seasoning" is understood as a period of bonding the binding agent with the adjacent layers. The binding agent used for lamination is a two-component glue and during its application and later during seasoning, the basis weight of the binding layer does not change because the binding agent is resin-based and the solvent with which the resin is mixed serves as a catalyst to create a chemical reaction of cross-linking process between the binding agent and individual layers of the material joined into laminate.

### Embodiments of the invention

The subject matter of the invention will be more clearly understood when read with the appended drawing in which:

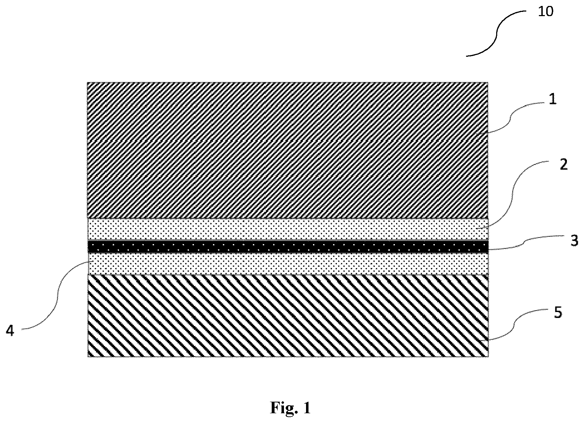

Fig. 1 shows a laminate 10 that has an aluminium layer 3. On one side of the aluminium layer 3, a paper layer 1 is located that is joined with the aluminium layer 3 by the first layer 2 of the binding agent. On the other side of the aluminium layer 3, a polyethylene layer 5 is situated. A second layer 4 of the binding agent is applied between the polyethylene layer 5 and the aluminium layer 3. In the case of employing the laminate for a package, the polyethylene layer 5 is the internal layer of the package, and the paper layer 1 is the external layer of the package. The paper layer 1 may be printed using any arbitrary printing method using any printing ink. The internal layer of the package serves for welding the material and then as a closure of the package. After making a package, the material is tight and impervious to smells.

### Manufacturing method:

Three materials: a paper layer 1, an aluminum layer 3, a polyethylene layer 5 in a reel packing are joined to each other on a laminating machine, in this indicated sequence, using a binding agent of a basis weight 5-7 g/m², by applying the binding agent between the individual layers.

The polyethylene layer 5, which is placed on a reel, is being unrolled on the machine and joined, using a binding agent in a laminating assembly, with the aluminum layer 3 that is also placed on a reel.

The thus obtained Aluminum / PE laminate is then subject to seasoning.

Preferably, the laminate is seasoned for 2 to 5 weeks in a specially dedicated room at a temperature from 20°C to 30°C. For example the seasoning process takes 3 weeks +/- 3 days, at a temperature of 25°C to bonding the binding agent with the adjacent layers.

After the period of seasoning, the process is repeated by joining, in a laminating assembly, the Aluminum / PE laminate wound on a reel with a paper layer that is also wound on a reel. After this stage the PAP/Aluminium/PE laminate is obtained.

The paper thickness used in laminat is measured by the manufacturer using the standard method according to the European standard - PN-EN ISO 534:2012.

After binding the individual layers with each other, the thus formed laminate is again subjected to the seasoning process. The aluminium layer with the polyethylene layer and/or the aluminium layer with the polyethylene layer and the paper layers are seasoned from 2 to 5 weeks.

The aluminium layer with the polyethylene layer and/or the aluminium layer with the polyethylene layer and the paper layers are seasoned at a temperature from 20°C to 30°C.

The inventive solution is presented below in embodiments. The presented examples are, in no way, limiting the invention and only make it possible to understand its possible implementations more clearly.

According to this invention and the following examples the laminate thickness is measured according to ISO method 4593, water vapor permeability (system permeability) according to method ASTM F1249, oxygen permeability according to ASTM D3985 method, static/kinetic coefficient of friction according to ISO 8295 method, breaking strength - transverse direction/longitudinal direction according to PN EN ISO 527-1.3 method, and elongation at break - longitudinal direction/transverse direction according to PN EN ISO 527-1.3 method. For the purposes of the present invention, the above indicated measurement methods should be understood as standard measurement techniques, their technical features and conditions for their implementation, and not only as above cited standard numbers.

### Example 1

### PAP170/Alu8/LDPE80 laminate thickness 275 µm ± 7%

PAP170/Alu8/LDPE80 laminate of a structure:
paper layer 1: thickness 170 µm
first adhesive layer 2: basis weight 5-7 g/m²
aluminum layer 3: thickness 8 µm
second adhesive layer 4: basis weight 5-7 g/m²
polyethylene layer 5 LDPE: thickness 80 µm.

Three materials: PAP170, Aluminum8, LDPE80 in a reel packing are joined to each other on a laminating machine by means of a solvent-based adhesive of a basis weight 5-7 g/m² by applying the solvent-based adhesive between individual layers.

LDPE80 is unrolled from the reel on a machine and joined by means of a solvent-based adhesive in a laminating assembly with Aluminum8 that is also delivered on a reel.

The thus obtained Aluminum8 / LDPE80 laminate is then subject to seasoning for 3 weeks in a specially dedicated room, at a temperature of 25°C.

After this period, the process is repeated, by joining, in a laminating assembly and by means of a solvent-based adhesive, the Aluminum8 / LDPE80 layer wound on a reel with a paper layer PAP170 that is also wound on a reel. After joining individual layers together by laminating, the formed laminate is again subjected to the seasoning process for 3 weeks in a specially dedicated room, at a temperature of 25°C.

The obtained material is a laminate structure **PAP170/Alu8/LDPE80.** This material is recyclable, i.e., it may be recycled in the same way as plastic materials. This laminate has barrier properties, i.e., it protects a product placed in the package completely in 100% by stopping the penetration of moisture, smells, et cetera, both from and into the packages. A package produced from this laminate contains ca. 60% smaller synthetic plastic materials per m² than currently used packages of similar basis weight, which are made from synthetic plastic material only. The material may be printed. The side for printing is paper layer 1. The aluminium layer 3 is the core layer, and the polyethylene layer 5 is the internal layer of the package. The polyethylene layer 5 (made from LDPE) serves for welding the material and then as a closure of the package. After making a package, the material of the laminate is tight and impervious to smells.

Optionally, a protective varnish may be applied onto the external layer 1 from the top side, which protects the laminate against scratches.

Below, technological requirements are presented:

| **TECHNOLOGICAL REQUIREMENTS** | |
|---|---|
| material type | Laminate: PAP 170/ Aluminum - 8 µm / LDPE white - 80 µm + varnish |
| Color | White |
| total thickness (METHODOLOGY-ISO 4593) | 275 µm ± 7% |
| Basis weight | 306 g/m² ± 7% |
| steam permeability | ≤ 2 g/m2 × 24 h, 38°C, 90% - RH |
| (METHODOLOGY-ASTM F 1249) | |
| oxygen permeability (METHODOLOGY-ASTM D3985) | ≤ 2 cm³ / m² × 24 h × 0,1 MPa, 23°C, 0%-RH |
| coefficient of traction | < 0,40 |
| (coefficient of friction) | |
| (METHODOLOGY ISO 8295) | |
| breaking strength (METHODOLOGY PN EN IS0527-1,3) | |
| Longitudinal direction | ≤ 60 MPa |
| Transverse direction | ≤ 35 MPa |
| elongation at break (METHODOLOGY PN EN IS0527-1,3) | |
| Longitudinal direction | ≤ 10% |
| Transverse direction | ≤ 10% |
| welding temperature | 140-180°C |

### Example 2

### A multilayer laminate of paper, aluminum, and polyethylene foil

### Laminate PAP110/Alu7/PE50 thickness 184 µm ± 7%

A laminate of a structure **PAP110/Alu7/PE50:**
paper layer 1: thickness 110 µm
first layer 2 of a binding agent with a solvent: basis weight 5-7 g/m²
aluminum layer 3: thickness 7 µm
second layer 4 of a binding agent with a solvent: basis weight 5-7 g/m²
PE polyethylene layer 5: thickness 50 µm.

Three materials: PAP110, Aluminum7, PE50 in a reel packing are joined on a laminating machine using a binding agent with a solvent of a basis weight 5-7 g/m² by applying the binding agent between individual layers.

PE50 is unrolled from the reel on a machine and joined by means of a first layer of the binding agent with a solvent in a laminating assembly with Aluminum7 that is also delivered on a reel.

The thus obtained Aluminum7 / PE50 laminate is then subject to seasoning for 5 weeks in a specially dedicated room, at a temperature of 20°C.

After this period, the process is repeated, by joining, in a laminating assembly, the aluminum7 / PE50 layer wound on a reel with a PAP110 paper layer that is also wound on a reel. After joining together individual layers by means of a second layer of the binding agent with a solvent in the lamination process, the formed laminate is again subjected to the seasoning process for 5 weeks in a specially dedicated room, at a temperature 20°C.

Below, technological requirements are presented:

| **TECHNOLOGICAL REQUIREMENTS** | |
|---|---|
| material type | Laminate: PAP 110 µm / Aluminum - 7 µm / |
| | LDPE white - 50 µm |
| Color | White |
| total thickness (METHODOLOGY-ISO 4593) | 184 µm ± 7% |
| Basis weight | 220 g/m² ± 7% |
| steam permeability | ≤ 2 g/m² × 24 h, 38°C, 90% - RH |
| (METHODOLOGY-ASTM F 1249) | |
| oxygen permeability (METHODOLOGY-ASTM D3985) | ≤ 2 cm³/m² × 24 h × 0,1 MPa, 23°C, 0%-RH |
| coefficient of traction | < 0,40 |
| (coefficient of friction) | |
| (METHODOLOGY ISO 8295) | |
| breaking strength (METHODOLOGY PN EN IS0527-1,3) | |
| Longitudinal direction | ≤ 60 MPa |
| Transverse direction | ≤ 30 MPa |
| elongation at break (METHODOLOGY PN EN IS0527-1,3) | |
| Longitudinal direction | ≤ 8% |
| Transverse direction | ≤ 10% |
| welding temperature | 140-180°C |

The obtained material is a laminate of a structure **PAP110/Alu7/PE50.** This material may be recycled, i.e., it may be recycled in the same way as plastic materials. This laminate has barrier properties, i.e., it protects a product placed in the package completely in 100% by stopping the penetration of moisture, smells, et cetera, both from and into the packages. A package produced from this material contains ca. 60% smaller synthetic plastic materials per m² than currently used packages of similar basis weight which are made from synthetic plastic materials only, without paper layer. The material may be printed. The side for printing is paper layer 1. The aluminium layer 3 is the core layer, and polyethylene (PE) layer 5 is the internal layer of the package. The internal layer serves for welding the material and then as a closure of the package. After making a package, the laminate is tight and impervious to smells.

### Example 3

### Multilayer laminate of paper, aluminum, and polyethylene foil.

### Laminate PAP220/Alu12/LDPE100 thickness 350 µm ± 7%

A laminate of a structure **PAP220/Alu12/LDPE100:**
paper layer 1: thickness 220 µm
first adhesive layer 2: basis weight 5-7 g/m²
aluminum layer 3: thickness 12 µm
second adhesive layer 4: basis weight 5-7 g/m²
LDPE layer 5: thickness 100 µm.

Three materials: PAP220, Aluminum12, LDPE100 in a reel packing are joined to each other on a laminating machine by means of a solvent-based adhesive of a basis weight 5-7 g/m² by applying the solvent-based adhesive between individual layers.

LDPE100 is unrolled from the reel on a machine and joined by means of a solvent-based adhesive in a laminating assembly with Aluminum12 that is also delivered on a reel.

The thus obtained Aluminum12 / LDPE100 laminate is then subject to seasoning for 2 weeks in a specially dedicated room, at a temperature 30°C. After this period, the process is repeated, by joining, in a laminating assembly and with a solvent adhesive, the Aluminum12 / LDPE100 layer wound on a reel with a paper layer PAP220 that is also wound on a reel. After binding the individual layers with each other, the formed laminate is again subjected to the seasoning for 2 weeks in a specially dedicated room, at a temperature of 30°C.

Below, technological requirements are presented:

| **TECHNOLOGICAL REQUIREMENTS** | |
|---|---|
| material type | Laminate: PAP 220 µm / Aluminum - 12 µm / LDPE - 100 µm |
| Color | White |
| total thickness (METHODOLOGY-ISO 4593) | 350 µm ± 7% |
| Basis weight | 440 g/m² ± 7% |
| steam permeability | ≤ 2 g/m² × 24 h, 38°C, 90% - RH |
| (METHODOLOGY-ASTM F 1249) | |
| oxygen permeability (METHODOLOGY-ASTM D3985) | ≤ 2 cm³/m² × 24 h × 0,1 MPa, 23°C, 0%-RH |
| coefficient of traction | < 0,40 |
| (coefficient of friction) | |
| (METHODOLOGY ISO 8295) | |
| breaking strength (METHODOLOGY PN EN ISO527-1,3) | |
| Longitudinal direction | ≤ 60 MPa |
| Transverse direction | ≤ 30 MPa |
| elongation at break (METHODOLOGY PN EN ISO527-1,3) | ≤ 8% |
| Longitudinal direction | ≤ 10% |
| Transverse direction | |
| welding temperature | 140-180°C |

The obtained material is a laminate of a structure **PAP220/Alu12/LDPE100.** This material may be recycled, i.e., it may be recycled in the same way as plastic materials. This laminate has barrier properties, i.e., it protects a product placed in the package completely in 100% by stopping the penetration of moisture, smells, et cetera, both from as well as into the packages. A package produced from this material contains ca. 60% smaller synthetic plastic materials per m² than currently used packages of similar basis weight which are made from synthetic plastic materials only, without paper layer. The material may be printed. The side for printing is paper layer 1. The aluminum layer 3 is the core layer, and the polyethylene (PE) layer 5 is the internal layer of the package. The internal layer 5 serves for welding the material and then as a closure of the package. After making a package, the laminate is tight and impervious to smells.

## Claims

1. A multilayer laminate (10) comprising paper, aluminum, and polyethylene layers, **characterized in that** the multilayer laminate (10) comprise the following layers:
- a paper layer (1) of a thickness in the range from 110 to 220 µm,
- a first layer (2) of a binding agent of a basis weight from 5 to 7 g/m²,
- an aluminum layer (3) of a thickness from 6 to 12 µm,
- a second layer (4) of a binding agent of a basis weight from 5 to 7 g/m² and
- a polyethylene layer (5) of a thickness in the range from 50 to 100 µm.

2. The multilayer laminate (10) according to Claim 1, **characterized in that** its total thickness is from 180 µm to 375 µm.

3. The multilayer laminate (10) according to Claim 1, **characterized in that** the polyethylene layer (5) is made from a low-density polyethylene (LDPE).

4. The multilayer laminate (10) according to Claim 1, **characterized in that** the first layer (2) of the binding agent and the second layer (4) of the binding agent is a one- and/or two-component solvent-based adhesive.

5. The multilayer laminate (10) according to Claim 1, **characterized in that** its steam permeability is ≤ 2 g/m2 × 24 h, 38°C, 90% - RH, and the oxygen permeability is ≤ 2 cm³/m² × 24 h × 0,1 MPa, 23°C, 0%-RH.

6. The multilayer laminate (10) according to Claim 1, **characterized in that** its coefficient of traction is < 0,40.

7. The multilayer laminate (10) according to Claim 1, **characterized in that** its breaking strength in the longitudinal direction is ≤ 60 MPa, and the breaking strength in the transverse direction is ≤ 30 MPa.

8. The multilayer laminate (10) according to Claim 1, **characterized in that** when the laminate (10) has a form of package, the paper layer (1) is the external layer, the aluminum layer (3) is the core layer, and the polyethylene layer (5) is the internal layer of the package and serves for welding the laminate (10) and then as a closure of the package.

9. A method for manufacturing the multilayer laminate (10), as defined in Claims 1 to 8 where the following layers of the laminate: paper layer (1), the aluminum layer (3), and the polyethylene layer (5) are joined to each other during lamination on a laminating machine, by means of a first and a second layers (2, 4) of a binding agent by applying the binding agent between individual, adjacent layers, the method comprising steps of:
a) unrolling a polyethylene layer (5) of a thickness in the range from 50 to 100 µm, from a reel on a laminating machine and joining it, by means of a second layer (4) of a binding agent of a basis weight from 5 to 7 g/m², in a laminating assembly, with an aluminum layer (3) of a thickness from 6 to 12 µm, that is also located on a reel,
b) seasoning the Alu/PE laminate obtained in step a) in a dedicated room at an ambient temperature,
c) after the period of seasoning, joining the Alu/PE laminate wound on the reel, from the side of the aluminium layer (3), with a paper layer (1) of a thickness in the range from 110 to 220 µm, that is also wound on a reel, by means of a first layer (2) of binding agent of a basis weight from 5 to 7 g/m² in a laminating assembly,
d) after joining together these layers, seasoning, again, the formed PAP/Alu/PE laminate obtained in step c) in a dedicated room at an ambient temperature.

10. The method according to Claim 9, **characterized in that** the laminate is seasoned in step b) and in step d) for 2 to 5 weeks at a temperature from 20°C to 30°C.

11. The method according to Claim 9, **characterized in that** as a polyethylene layer (5) a low-density polyethylene (LDPE) is used.
